# EUROPEAN PATENT SPECIFICATION

(11) **EP 3 352 164 B1**
(45) Date of publication and mention of the grant of the patent: **25.03.2020**
(21) Application number: 16845800.8
(22) Date of filing: 12.09.2016
(51) Int. Cl.: G10G 3/04, G09B 21/00, G09B 15/02

(54) **MUSICAL INSTRUMENT FOR HEARING-IMPAIRED PERSONS**
MUSIKINSTRUMENT FÜR HÖRBEHINDERTE
INSTRUMENT DE MUSIQUE POUR PERSONNES PRÉSENTANT DES TROUBLES DE L'AUDITION

(30) Priority: 16.09.2015 CO 15219549
(43) Date of publication of application: 25.07.2018
(73) Proprietor: Universidad de San Buenaventura Medellín, Medellin, Antioquia (CO)
(72) Inventor: CÁRDENAS TORRES, Andrés Mauricio, Medellín (CO); GÓMEZ GÓMEZ, Beatriz Liliana, Medellín (CO); RIVERA MUÑOZ, León Mauricio, Medellín (CO)
(74) Representative: Sach, Greg Robert
(86) International application number: PCT/IB2016/055423
(87) International publication number: WO 2017/046689

(56) References cited:
- CN-A- 1 076 048
- CN-A- 103 714 799
- JP-A- H11 202 856
- US-A- 3 395 461
- US-A- 3 460 426
- US-A1- 2014 161 286
- US-A1- 2015 143 975
- Vanessa Henriksen Goedhart ET AL: "Xylophonic Interaction Design", Sound and Sensors Medialogy, 27 May 2010 (2010-05-27), XP055370408, Retrieved from the Internet: URL:http://vbn.aau.dk/files/31928870/Xylop honic%20MED4%20433.pdf [retrieved on 2017-05-09]
- VANESSA GOEDHART HENRIKSEN ET AL.: 'Xylophonic Interaction Design' SOUND AND SENSORS, MEDIALOGY, [Online] 27 May 2010, XP055370408 Retrieved from the Internet: <URL:http://vbn.aau.dk/files/3i928870/Xylop honic%.20MED4%.20433.pdf> [retrieved on 1802-08-17]

## Description

### Field of the Invention

The present invention relates to the field of the music industry, preferably for musical keyboard instruments, and more particularly relates to an instrument for hearing impaired people wherein the instrument allows and facilitates learning in a practical, dynamic and didactic manner, with the purpose of generating social inclusion of the people in the field of the art. It is remarked that the musical instrument of the present invention can be adapted and used in conjunction with keyboard musical instruments having no inconvenience to further assist with the development and learning of people with hearing impairment.

### Description of the Prior Art

To better understand the purpose and scope of the present invention it is convenient to describe the current state of the art in reference to the drawbacks that arise with musical instruments and hearing impaired people.

Musical instruments are well known in the art and generally they can be classified in strings, wind, percussion and electric instruments. Development in teaching and learning often depends on the ability of the individual and more particularly of the perception of music or different sounds generated and emitted by the instruments. This perception of sounds allows people to develop the art in a faster or a slower manner depending on each case but, by perceiving the sounds, people can recognize if they are playing the instrument properly and correctly. However, those who have hearing problems or hearing impairment, can not participate in the field of musical art because they are unable to develop this perception of sounds or music.

As a result, over the course of time, new musical instruments have been created for the inclusion and learning of those hearing impaired persons. In a preferred embodiment example, Patent Document CN 201310744265 discloses a piano and method for permitting deaf people to play that instrument, wherein said piano has a set of keys that, when touched, press a hammer which in turn presses a connector with a vibration sensor, with said vibration sensor being connected, via a cable, to a timer and a motherboard that allows continuous display on a screen the musical note that is being touched by the person and the time of each note, with indication of wrong playing. Thus, the use of the piano allows people with hearing disabilities to learn the musical rules by knowing the intensity with which a piano key is pressed, the note, the time of the note and the precision in synchronization. In another preferred embodiment, Patent Document CN 93102001 can be mentioned which discloses a device that emits light of a color corresponding to the frequency of the key that was touched, which device can be placed on a piano, organ or electric keyboard. Thus, the keyboard allows people to memorize notes from a color. XP055370408 discloses a xylophone for hearing-impaired persons that allows the user to feel vibrations in the mallets as the keys of the xylophone are stroked. Also, the user can see in a display a curve for each key that is stroked, the curves having a height corresponding to the strength of the impact. However, this xylophone does not allow the user to feel vibrations with a strength that varies with the strength of the stroke while at the same time a color corresponding to the note of the key that was stroked is being displayed.

Under the current state of the art and availability of musical instruments for learning and inclusion of people with hearing disabilities, it would be very convenient to have a new musical instrument that can improve cognitive development and experience of the people when touching the respective keys of the instrument, as well as the sensitivity and the notion of time during which each key must be played.

### BRIEF DESCRIPTION OF THE INVENTION

It is therefore an object of the present invention to provide an object of the present invention to provide a new musical instrument for hearing impaired or "deaf" persons, as defined in the independent claim 1.

### BRIEF DESCRIPTION OF THE DRAWINGS

For better clarity and understanding of the object of the present invention, it has been illustrated in several figures, in which the invention is shown in preferred embodiments, all by way of example, wherein:
Figure 1 shows a perspective view of the musical instrument according to the present invention;
Figure 2 shows a top view of the keyboard of the musical instrument according to the present invention;
Figure 3 shows a front view of the keyboard of Figure 2 and in accordance with the present invention;
Figure 4 shows an enlarged view of a keyboard part of Figure 3 wherein one of the keys can be seen in detail;
Figure 5 shows a perspective view of a processing device according to the present invention;
Figure 6 shows a top interior view of the processing device of Figure 5;
Figure 7 shows a bottom interior view of the processing device of Figure 5;
Figure 8 shows a side view of the processing device of Figure 5 and according to the present invention;
Figure 9 shows a perspective view of the vibration transmitting means according to the present invention; y
Figure 10 shows an enlarged view of one of the vibration transmitting means of Figure 9.

### DETAILED DESCRIPTION OF THE INVENTION

Referring now to the figures it is seen that the invention consists of a new musical instrument for hearing impaired or "deaf" persons, which instrument provides social inclusion, teaching and learning in a practical and didactic manner, thereby improving the cognitive development of the persons. It is noteworthy that, the musical instrument of the present invention may be adapted for use in conjunction with other musical instruments in the field of the art such as organs, keyboards, pianos, etc. without any inconvenience, thus helping further the process of improving the experience and learning.

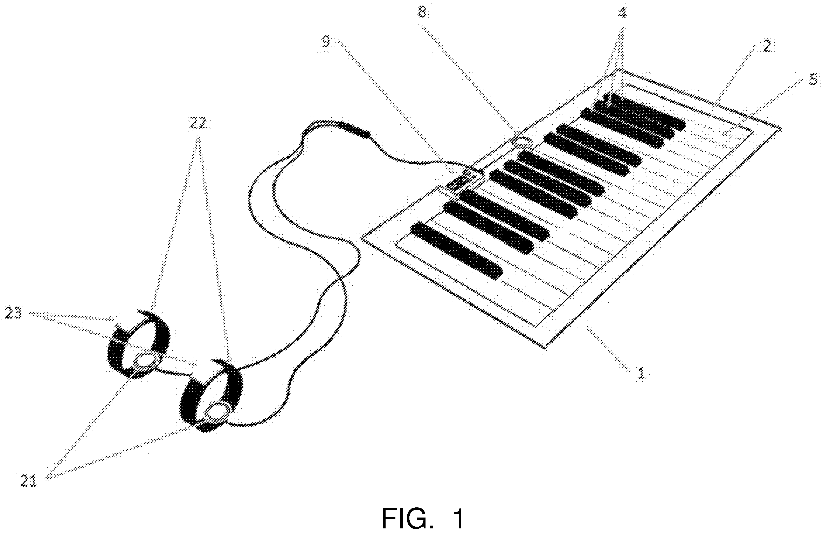

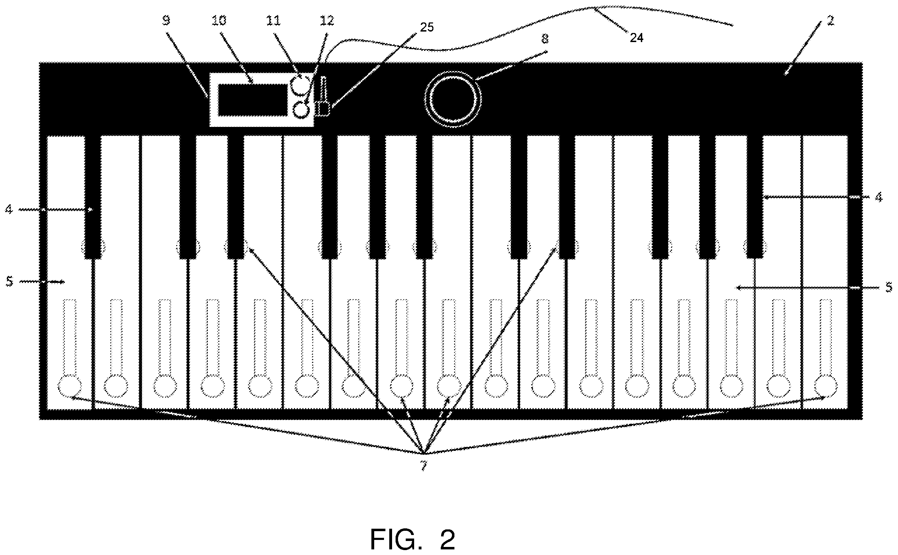

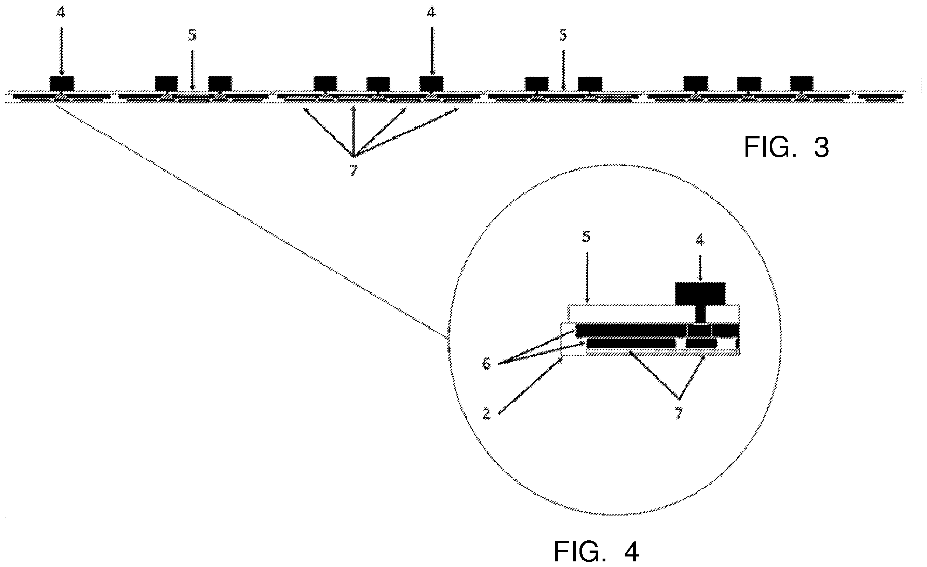

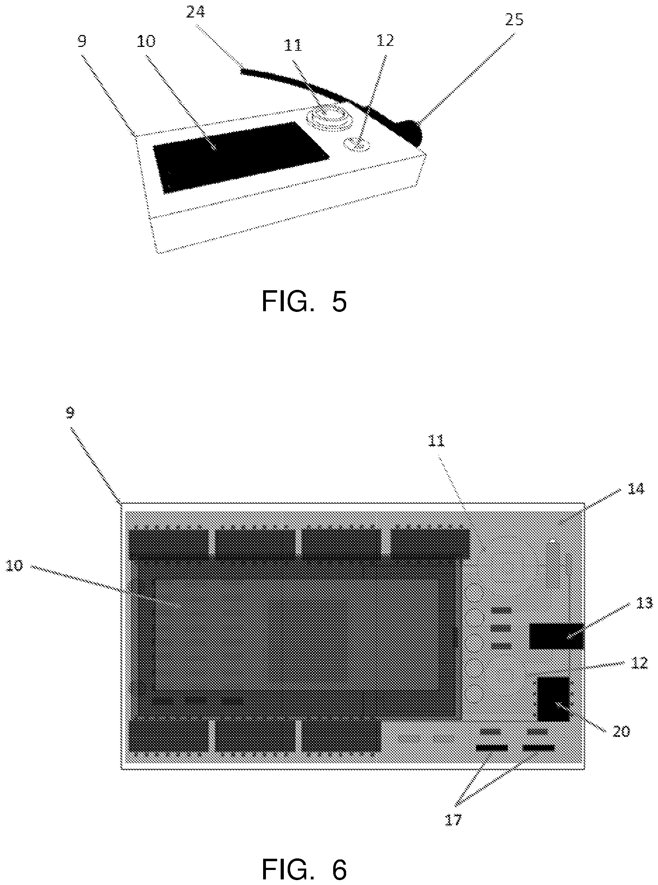

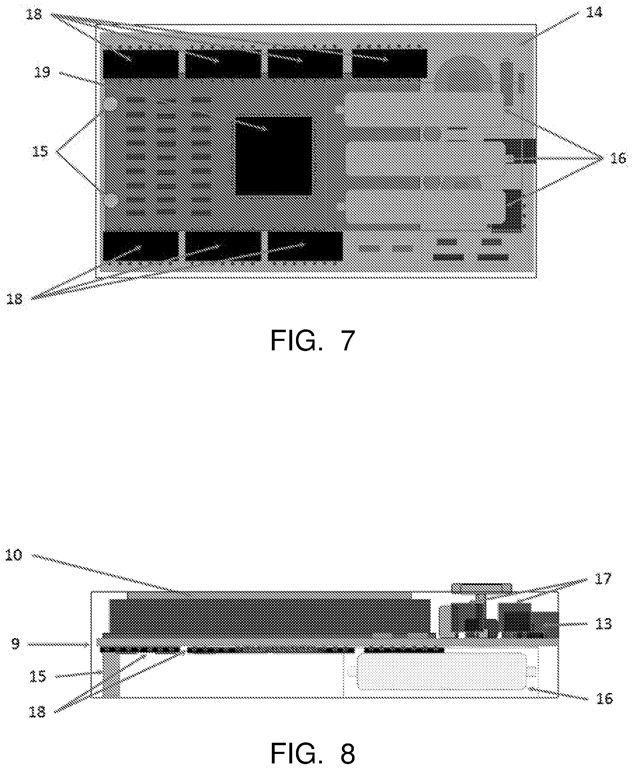

According to Figures 1 to 10, the musical instrument of the present invention is indicated by the general reference 1 and comprises a base platform 2 of flexible material on which a keyboard 3 is located and constituted by held keys 4 and natural keys 5. Said held 4 and natural 5 keys are supported on respective pads 6 that allow the distribution of the force exerted on an electric force sensor 7 located under the keys. The arrangement of the force sensors 7 allows the generation of electrical signals to be sent to a respective electronic circuit to be described below. Likewise, said flexible base platform 2 has a light indicator 8 that may comprise at least three electrical resistances, a tricolor light emitting diode RGB for exhibiting colors and a light diffusion sheet. The light indicator allows people to view a specific color related to the note that has been played.

Furthermore, said flexible platform 2 is provided with an electronic circuit comprising a processing device 9 which has an outer part and an inner part. Wherein said outer part is provided with a liquid crystal display 10, a vibration intensity variator 11, an on/off push button 12 and a female connector 13. The inner part has an electronic card 14 for connection of the electronic elements that are supported on two brackets 15. Furthermore, at least three batteries 16 are provided which supply power to the components and whose voltage is regulated by two electronic transistors 17 that deliver power to a pair of impedance coupler integrated circuits 18, to an integrated micro-controller 19 and to at least one power amplifying integrated circuit 20.

It is emphasized that, said microcontroller integrated circuit 19 receives electrical signals from the force sensors 7, processes and converts the signal into a synodal signal with the fundamental frequency signal corresponding to the musical note of the played key and an amplitude proportional to the force exerted when the keys was pressed. Then, said power amplifying integrated circuit 20 receives the synodal signal, amplifies the signal by using the vibration intensity variator 11 and sends the signal to a pair of vibration transmitting means 21.

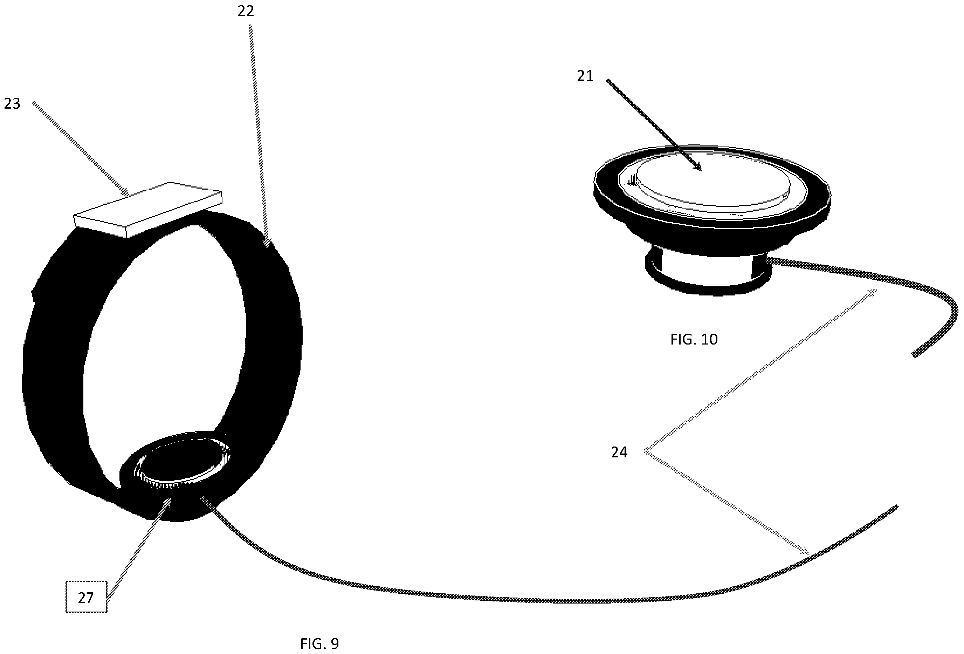

According to Figures 9 and 10, said pair of vibration transmitting means 21 may comprise at least one transducer 21 which is mounted on an adjustable mesh 22 provided with a seal 23. This transducer 21 is operatively connected to power amplifier 20 of the processing device 9 via respective cables 24 having a male connector 25 connected to female connector 13. Thus, the synodal signals sent by power amplifying integrated circuit 20 are converted, by transducer 21, into mechanical vibrations that can be felt by the person playing the piano and the vibration intensity is regulated by the variator 11.

It is emphasized that the mesh 22 can be adjusted to any body part of the person who can have a point of sensitivity for detecting vibrations, this point being preferably wrists of people in order to allow a better feel of the mechanical vibrations generated by 21 transducers.

Thus, when a key is pressed, the force sensor 7 outputs an electric signal to the integrated micro-controller 19 which processes and converts this signal into a synodal signal with the fundamental frequency corresponding to the musical note of the played key and with an amplitude proportional to the force exerted over the key, then the signal is amplified and sent to the transducer 21 which converts the signal into mechanical vibration. Furthermore and simultaneously, the micro-controller integrated circuit 19 associates a specific color to the note that was played and sends a signal to both the light indicator 8 and the display 10 with the purpose that the player can see the musical notes he/she is playing and their frequency.

It is noted that each held key 4 or natural key 5 is associated to the respective musical notes present in organs, pianos or conventional keyboards and are well known in the field of this art. However, although the musical instrument of the present invention may not emit any sound, this does not imply that the invention is restricted to learning methods. This is because the musical instrument of the invention can be adapted and used in conventional musical instruments such as organs, keyboards or pianos without any inconvenience with the purpose of allowing hearing impaired persons to learn as well as, teachers give better instruction to impaired persons.

Thus the present invention provides a constituted and constructed musical instrument which allows a better cognitive development, learning and social inclusion of hearing impaired or deaf persons in the field of art, thanks to the combination of transducers 21 in conjunction with processing device 9, force sensors 7 and keys 4 and 5, which allow the conversion of electrical signals into mechanical vibrations to be felt by people to have a better experience, notion and sensitivity when they play the instrument.

## Claims

1. A musical instrument for hearing-impaired persons, comprising a keyboard (3) having a plurality of keys which are connected to force sensors (7) that are operatively connected to an electronic circuit, a base platform (2) on which said keyboard is arranged, at least one light indicator (8) connected to the electronic circuit, at least one pair of vibration transmitting means (21) that conform to a body part of the person and which are connected to said electronic circuit, the electronic circuit comprising a processing device (9) having a vibration intensity variator (11) and at least one screen (10),
**characterized in that** the electronic circuit is configured to: i) receive the electric signals from the force sensors when the keys of the keyboard are pressed, ii) process the electric signals, and convert them into a sine signal with the fundamental frequency of the musical note corresponding to each of the pressed keys and with amplitude proportional to the force exerted while pressing the keys, iii) amplify the sine signal through the vibration intensity variator, and send the amplified signal to the vibration transmitting means, where the amplified signal is converted into mechanical vibrations according to the amplitude of the sine signal, and iv) associate a specific color to the note of the key that was pressed and send a signal to the at least one light indicator (8) and to the at least one screen (10), where said color is displayed.

2. A musical instrument according to claim 1, wherein a pad (6) is arranged between each of said keys and said force sensors (7).

3. A musical instrument according to claims 1 or 2, wherein said force sensors (7) and light indicators (8) are operatively connected to a micro-controller integrated circuit (19) provided in said processing device (9).

4. A musical instrument according to claims 1 or 3, wherein said processing device (9) further includes a power amplifying integrated circuit (20) connected to said vibration intensity variator and to said micro-controller integrated circuit (19).

5. A musical instrument according to claim 1, wherein said vibration transmitting means (21) comprise a transducer (21) mounted in an adjustable mesh (22).

6. A musical instrument according to claim 5, wherein said adjustable mesh (22) is set on the wrist of the person.

7. A musical instrument according to claims 4 or 5, wherein said transducer (21) is connected to said power amplifying integrated circuit (20) via respective cables.

8. A musical instrument according to claim 1, wherein said base platform (2) is flexible.

## Patentansprüche

1. Musikinstrument für hörgeschädigte Personen, umfassend ein Tastenfeld (3) mit einer Vielzahl Tasten, welche mit Kraftsensoren (7) verbunden sind, die mit einem elektronischem Schaltkreis wirkverbunden sind, eine Basisplattform (2), auf der das Tastenfeld angeordnet ist, zumindest eine Leuchtanzeige (8), die mit dem elektronischen Schaltkreis verbunden ist, zumindest ein Paar vibrationsübertragender Elemente (21), die einem Körperteil der Person entsprechen und die mit dem elektronischen Schaltkreis verbunden sind, wobei der elektronische Schaltkreis eine Verarbeitungseinrichtung (9) mit einem Vibrationsintensitätsvariator (11) und zumindest einem Bildschirm (10) umfasst,
**dadurch gekennzeichnet, dass** der elektronische Schaltkreis ausgebildet ist, um:
(i) die elektrischen Signale von den Kraftsensoren zu empfangen, wenn die Tasten des Tastenfelds gedrückt werden,
(ii) die elektrischen Signale zu verarbeiten und diese in ein Sinussignal mit der Grundfrequenz der musikalischen Note umzuwandeln, die jeder der gedrückten Tasten entspricht und wobei die Amplitude proportional zu der Kraft ist, die während dem Drücken der Tasten ausgeübt wird,
(iii) das Sinussignal durch den Vibrationsintensitätsvariator zu verstärken und das verstärkte Signal an die Vibrationsübertragungseinrichtung zu senden, wobei das verstärkte Signal in mechanische Vibrationen gemäß der Amplitude des Sinussignals umgewandelt wird, und
(iv) eine spezifische Farbe der Note der Taste zuzuordnen, die gedrückt wurde, und ein Signal an die zumindest eine Lichtanzeige (8) und an den zumindest einen Bildschirm (10) zu senden, wobei die Farbe angezeigt wird.

2. Musikinstrument nach Anspruch 1, bei dem eine Unterlage (6) zwischen jeder der Tasten und den Kraftsensoren (7) angeordnet ist.

3. Musikinstrument nach Anspruch 1 oder 2, bei dem die Kraftsensoren (7) und Lichtanzeigen (8) mit einem Mikrocontrollerschaltkreis (19) wirkverbunden sind, der in der Verarbeitungseinrichtung (9) vorgesehen ist.

4. Musikinstrument nach Anspruch 1 oder 3, bei dem die Verarbeitungseinrichtung (9) ferner einen Leistungsverstärkungsschaltkreis (20) umfasst, der mit dem Vibrationsintensitätsvariator und dem Mikrocontrollerschaltkreis (19) verbunden ist.

5. Musikinstrument nach Anspruch 1, bei dem die Vibrationsübertragungseinrichtung (21) einen Umwandler (21) umfasst, der in einem einstellbaren Geflecht (22) angeordnet ist.

6. Musikinstrument nach Anspruch 5, bei dem das einstellbare Geflecht (22) an dem Handgelenk der Person angeordnet ist.

7. Musikinstrument nach Anspruch 4 oder 5, bei dem der Umwandler (21) mit dem Leistungsverstärkungsschaltkreis (20) über entsprechende Kabel verbunden ist.

8. Musikinstrument nach Anspruch 1, bei dem die Basisplattform (2) flexibel ist.

## Revendications

1. Instrument de musique pour personnes malentendantes, comprenant un clavier (3) ayant une pluralité de touches qui sont connectées à des capteurs de force (7) qui sont connectés fonctionnellement à un circuit électronique, une plate-forme de base (2) sur laquelle ledit clavier est disposé, au moins un indicateur lumineux (8) connecté au circuit électronique, au moins une paire de moyens de transmission de vibrations (21) qui se conforment à une partie du corps de la personne et qui sont connectés audit circuit électronique, le circuit électronique comprenant un dispositif de traitement (9) ayant un variateur d'intensité de vibration (11) et au moins un écran (10),
**caractérisé en ce que** le circuit électronique est configuré pour: i) recevoir les signaux électriques des capteurs de force lorsque les touches du clavier sont enfoncées, ii) traiter les signaux électriques et les convertir en un signal sinusoïdal avec la fréquence fondamentale de la note musicale correspondant à chacune des touches enfoncées et d'amplitude proportionnelle à la force exercée lors de l'appui sur les touches, iii) amplifier le signal sinusoïdal à travers le variateur d'intensité de vibration, et envoyer le signal amplifié aux moyens de transmission de vibration, où le signal amplifié est converti en vibrations mécaniques en fonction de l'amplitude du signal sinusoïdal, et iv) associer une couleur spécifique à la note de la touche enfoncée et envoyer un signal à au moins un indicateur lumineux (8) et à au moins un écran (10), où ladite couleur est affichée.

2. Instrument de musique selon la revendication 1, dans lequel un coussinet (6) est disposé entre chacune desdites touches et lesdits capteurs de force (7).

3. Instrument de musique selon les revendications 1 ou 2, dans lequel lesdits capteurs de force (7) et indicateurs de lumière (8) sont connectés fonctionnellement à un circuit intégré à microcontrôleur (19) prévu dans ledit dispositif de traitement (9).

4. Instrument de musique selon les revendications 1 ou 3, dans lequel ledit dispositif de traitement (9) comprend en outre un circuit intégré d'amplification de puissance (20) connecté audit variateur d'intensité de vibration et audit circuit intégré de microcontrôleur (19).

5. Instrument de musique selon la revendication 1, dans lequel lesdits moyens de transmission de vibrations (21) comprennent un transducteur (21) monté dans un maillage réglable (22).

6. Instrument de musique selon la revendication 5, dans lequel ladite maille réglable (22) est placée sur le poignet de la personne.

7. Instrument de musique selon les revendications 4 ou 5, dans lequel ledit transducteur (21) est connecté audit circuit intégré d'amplification de puissance (20) via des câbles respectifs.

8. Instrument de musique selon la revendication 1, dans lequel ladite plate-forme de base (2) est flexible.
